(19) Europäisches Patentamt / European Patent Office / Office européen des brevets

(11) **EP 2 360 621 B1**

(12) **FASCICULE DE BREVET EUROPEEN**

(45) Date de publication et mention
de la délivrance du brevet:
**16.10.2013 Bulletin 2013/42**

(51) Int Cl.:
***G06K 9/32*** *(2006.01)*     ***G06T 7/00*** *(2006.01)*

(21) Numéro de dépôt: **11150856.0**

(22) Date de dépôt: **13.01.2011**

(54) **Procédé de détection d'une cible dans une image acquise depuis un véhicule survolant un corps céleste**

Verfahren zur Detektion eines Ziels in einem Bild, welches von einem einen Himmelskörper überfliegenden Gefährt aufgenommen wird.

Procedure for detecting a target in an image taken from a vehicle flying over a celestial body

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2010 FR 1000140**

(43) Date de publication de la demande:
**24.08.2011 Bulletin 2011/34**

(73) Titulaire: **ASTRIUM SAS**
**92150 Suresnes (FR)**

(72) Inventeurs:
• **Ortner, Mathias**
**31500 Toulouse (FR)**
• **Samson, Vincent**
**31300 Toulouse (FR)**

(74) Mandataire: **Fourcade, Emmanuelle**
**Schmit-Chrétien SNC**
**Parc de Basso Cambo**
**4 Rue Paul Mesplé**
**31100 Toulouse (FR)**

(56) Documents cités:
**FR-A1- 2 923 024     US-A1- 2005 185 824**

• **VARSANO L., YATSKAER I., ROTMAN S.: "Temporal target tracking in hyperspectral images", OPTICAL ENGINEERING, décembre 2006 (2006-12), pages 126201-1-126201-30, XP040214756,**

EP 2 360 621 B1

**Description**

La présente invention appartient au domaine de l'exploitation d'images obtenues par un capteur optique embarqué à bord d'un véhicule survolant la terre. Plus particulièrement, la présente invention concerne un procédé de détection de cibles dans une image ou une séquence d'images représentant sensiblement une même scène à la surface d'un corps céleste tel que la Terre. Par « cible », on entend tout événement ponctuel qui apparaît dans une image.

L'invention trouve une application particulièrement avantageuse, bien que nullement limitative, dans la détection de cibles du type missile balistique, d'après des images acquises par un capteur matriciel optique embarqué dans un satellite en orbite Terrestre. L'invention pourrait également être appliquée à la détection de départs de feux de forêts par exemple.

Les images acquises par de tels capteurs se présentent généralement sous la forme de matrices de pixels, agencés en lignes et en colonnes, chaque pixel représentant une portion d'une scène observée.

La détection de cibles dans de telles images, en particulier des missiles balistiques, pose un problème lié à la dimension desdites cibles.

En effet, du fait notamment de l'éloignement du satellite par rapport à la Terre, les dimensions réelles des cibles sont généralement de dimensions inférieures à celles des portions représentées par les pixels des images. Les dimensions des cibles, considérées par rapport aux dimensions d'une image, sont généralement pixelliques (c'est- à- dire à l'échelle du pixel), voire sous- pixelliques (c'est- à- dire inférieures au pixel).

Il est possible de réduire les dimensions desdites portions au moyen d'un capteur optique haut de gamme. Toutefois, l'utilisation d'un capteur optique haut de gamme s'accompagne d'une augmentation de la complexité du système d'observation, et par conséquent d'une augmentation de son coût.

De plus, la résolution de tels capteurs haut de gamme est elle-même limitée, et on comprend que d'autres moyens, en particulier des moyens de traitement des images acquises, doivent être mis en oeuvre pour améliorer la détection de cibles faiblement résolues, c'est-à-dire de dimensions pixelliques ou sous-pixelliques.

Pour la détection de cibles dans des images, il est connu, en particulier de la publication scientifique « Detecting small moving objects using temporal hypothesis testing », des auteurs A. Tzannes et D.H. Brooks (IEEE Transactions on Aerospace and Electronics Systems, vol. 38, n°2, Avril 2002), de supprimer préalablement le fond des images. Le fond d'une image correspond à la partie essentiellement statique de la scène observée, c'est-à-dire dont les variations sont lentes par rapport au temps estimé d'apparition d'une cible.

FR 2923024 A1 décrit un procédé de détection d'une cible dons une image.

US 2005/0185824 A1 décrit la détection d'un target, et l'éstimation des caractéristiques statistiques du bruit de l'image et la détermination d'une valeur d'un seuil en fonction desdites caractéristiques estimées.

Suivant cet état de l'art, la détection s'effectue en comparant, pour chaque pixel, la radiométrie mesurée, à laquelle le fond a été préalablement retranché, à un seuil prédéfini qui est le même pour tous les pixels de l'image.

Toutefois, un inconvénient d'une telle approche réside dans le fait que les performances de la détection, notamment exprimées sous la forme d'une probabilité de fausse alarme (c'est- à- dire la probabilité de détection d'une cible en l'absence de cible) dépendent du rapport signal sur bruit dans l'image. Le rapport signal sur bruit peut varier d'un pixel à l'autre, en fonction de la scène observée représentée par le fond de l'image.

Par exemple, le niveau de signal mesuré pour un nuage sera généralement supérieur au niveau d'un signal mesuré en l'absence de nuage.

De plus, le niveau de bruit dépend également de la scène observée. En particulier, le bruit photonique, introduit par le capteur optique, peut être modélisé par une loi Normale dont la variance serait égale au niveau du signal reçu de la portion de scène observée. On comprend donc que le niveau de bruit n'est pas nécessairement le même d'un pixel à l'autre.

On comprend que la probabilité de fausse alarme ne sera pas la même suivant, par exemple, qu'on détecte une cible sur fond nuageux (c'est- à- dire avec un nuage entre la cible et la Terre) ou sur fond de Terre (c'est- à- dire sans nuage entre la cible et la Terre). Cet inconvénient est généralisable à tous les procédés connus de détection de cibles.

Ceci est d'autant plus gênant en limite de nuage, puisque le rapport signal sur bruit, et donc les performances de détection, vont varier d'une image à l'autre. En particulier, des mouvements parasites de la ligne de visée du capteur au cours de l'acquisition d'images induisent une erreur, dite « de registration », et les scènes observées d'une image à l'autre ne sont pas exactement les mêmes. Un pixel en limite de nuage correspondra, d'une image à l'autre, à un fond nuageux ou à un fond de Terre, et on comprend que le passage d'un signal correspondant à un fond de Terre à un signal correspondant à un fond nuageux pourra entraîner une fausse alarme.

La présente invention vise à proposer un procédé de détection de cibles dont les performances seront améliorées par rapport aux procédés connus. En particulier, la présente invention vise à proposer un procédé de détection dont les performances, notamment exprimées sous la forme de probabilité de fausse alarme, sont sensiblement les mêmes quel que soit le niveau de signal détecté dans une image.

EP 2 360 621 B1

La présente invention vise également à proposer un procédé de détection dont certains modes de mise en oeuvre soient robustes en la présence de décalages résiduels entre images acquises successivement, décalages qui seraient dus notamment à des erreurs de registration induites par des mouvements parasites de la ligne de visée du capteur optique.

La présente invention a pour objet un procédé de détection d'une cible dans au moins une image constituée d'une pluralité de pixels, dite « image de détection », la détection s'effectuant par évaluation, en chaque pixel à évaluer, d'un test de détection par rapport à au moins un seuil. La valeur de l'au moins un seuil dépend du pixel à évaluer, et en ce que ledit procédé comporte, pour chaque pixel à évaluer, les étapes de :

- estimation d'un fond de l'image de détection en ce pixel et estimation de caractéristiques statistiques de l'erreur d'estimation du fond de l'image en ce pixel,
- détermination de la valeur de l'au moins un seuil en ce pixel en fonction du fond estimé de l'image en ce pixel et en fonction des caractéristiques statistiques estimées de l'erreur d'estimation du fond de l'image en ce pixel.

De telles dispositions permettent, du fait que l'erreur d'estimation du fond est prise en compte pour déterminer la valeur de l'au moins un seuil en chaque pixel à évaluer, de mieux contrôler les performances du procédé de détection. En particulier, de telles dispositions permettent de mieux contrôler la probabilité de fausse alarme du procédé de détection.

Suivant un premier mode préféré de mise en oeuvre, les caractéristiques statistiques estimées de l'erreur d'estimation du fond en un pixel à évaluer sont au moins un écart-type de l'erreur d'estimation en ce pixel.

De préférence, la valeur de l'au moins un seuil associée à un pixel à évaluer est déterminée en remplaçant, dans la détermination de la valeur de l'au moins un seuil, le fond estimé en ce pixel par un fond de remplacement égal à une fonction dudit fond estimé et de l'écart type estimé de l'erreur d'estimation en ce pixel.

De préférence, pour chaque pixel à évaluer, la valeur de l'au moins un seuil en ce pixel est exprimée dans un premier temps en fonction du fond estimé en ce pixel, puis la valeur de l'au moins un seuil en ce pixel est déterminée en remplaçant le fond estimé en ce pixel par le fond estimé en ce pixel augmentée d'une quantité représentative de l'erreur d'estimation du fond en ce pixel, cette quantité étant par exemple proportionnelle à l'écart-type estimé de l'erreur d'estimation du fond en ce pixel, la constante de proportionnalité étant avantageusement la même en chaque pixel à évaluer.

De préférence, pour chaque pixel à évaluer, la valeur de l'au moins un seuil en ce pixel est déterminée comme étant :

- d'après une expression de la probabilité de fausse alarme du test de détection, expression qui dépend du fond estimé et de l'au moins un seuil à déterminer,

la valeur permettant d'assurer que la probabilité de fausse alarme en ce pixel est théoriquement égale ou inférieure à une valeur prédéfinie, en considérant le fond estimé en ce pixel comme étant égal au fond de remplacement.

Suivant un second mode préféré de mise en oeuvre, les caractéristiques statistiques estimées de l'erreur d'estimation du fond en un pixel à évaluer sont au moins une fonction représentative d'une densité de probabilité de l'erreur d'estimation du fond en ce pixel.

De préférence, pour chaque pixel à évaluer, la valeur de l'au moins un seuil en ce pixel est déterminée comme étant :

- d'après une expression de la probabilité de fausse alarme du test de détection, expression qui dépend du fond estimé, de la densité de probabilité estimée de l'erreur d'estimation du fond, et de l'au moins un seuil à déterminer,

la valeur permettant d'assurer que la probabilité de fausse alarme en ce pixel est théoriquement égale ou inférieure à une valeur prédéfinie.

Par exemple, pour chaque pixel à évaluer, on exprime la probabilité de fausse alarme du test de détection en ce pixel en fonction de la valeur d'au moins un seuil en ce pixel, du fond estimé en ce pixel, et de ladite densité de probabilité estimée de l'erreur d'estimation du fond, puis la valeur dudit au moins un seuil en ce pixel est déterminée en fonction dudit fond estimé en ce pixel et d'un tirage statistique d'un ensemble de réalisations de l'erreur d'estimation du fond en ce pixel suivant ladite densité de probabilité, de sorte que la probabilité de fausse alarme en ce pixel soit égale ou inférieure à une valeur prédéfinie.

Suivant des modes particuliers de mise en oeuvre, le procédé de détection comporte l'une ou plusieurs des caractéristiques suivantes, prises isolément ou suivant toutes les combinaisons techniquement possibles.

De préférence, on utilise le fond estimé pour modéliser, dans la détermination de la valeur de l'au moins un seuil en chaque pixel à évaluer, un bruit instationnaire dont les caractéristiques dépendent d'un niveau du signal mesuré en ce pixel, de préférence un bruit instationnaire photonique. De telles dispositions permettent de mieux modéliser le

3

bruit de mesure.

De préférence, une fonction de test T utilisée par le test de détection s'exprime en chaque pixel p à évaluer à un instant t sous la forme suivante:

si $y(p,t) - \mu e(p,t) \geq \varepsilon_{MIN}$ :

$$T = \frac{(y(p,t) - \mu e(p,t))^2}{\sigma_E^2 + \mu e(p,t)}$$

si $y(p,t) - \mu e(p,t) < \varepsilon_{MIN}$ :

$$T = \frac{(y(p,t) - \mu e(p,t))^2}{\sigma_E^2 + \mu e(p,t)} - \frac{(y(p,t) - \mu e(p,t) - \varepsilon_{MIN})^2}{\sigma_E^2 + \mu e(p,t) + \varepsilon_{MIN}}$$

expressions dans lesquelles y est la valeur du pixel p, $\mu e$ est le fond estimé en ce pixel p, $\sigma_E$ est un écart-type prédéterminé d'un bruit de mesure, et $\varepsilon_{MIN}$ est un niveau minimal prédéfini d'une cible à détecter.

De préférence, lorsque la détection utilise un nombre M d'images de détection, la fonction de test T s'exprime sous la forme suivante :

si $ym(p,t) - \mu e(p,t) \geq \varepsilon_{MIN}$ :

$$T = \sum_{m=0}^{M-1} \frac{(y(p,t + m\Delta t) - \mu e(p,t))^2 - (y(p,t + m\Delta t) - ym(p,t))^2}{\sigma_E^2 + \mu e(p,t)}$$

si $ym(p,t) - \mu e(p,t) < \varepsilon_{MIN}$:

$$T = \sum_{m=0}^{M-1} \frac{(y(p,t + m\Delta t) - \mu e(p,t))^2 - (y(p,t + m\Delta t) - \mu e(p,t) - \varepsilon_{MIN})^2}{\sigma_E^2 + \mu e(p,t)}$$

expressions dans lesquelles $\Delta t$ est la période d'acquisition entre des images de détection, et ym est la valeur moyenne des pixels p des M images de détection.

De préférence, l'étape d'estimation du fond et d'estimation des caractéristiques statistiques de l'erreur d'estimation du fond met en oeuvre un filtre de Kalman prenant en compte un modèle d'évolution du fond de l'image de détection.

De préférence, le modèle d'évolution du fond de l'au moins une image de détection comporte une composante d'évolution spatiale et une composante d'évolution temporelle.

De préférence, la composante d'évolution spatiale et la composante d'évolution temporelle sont modélisées, pour un pixel à évaluer, par des lois normales de moyennes nulles et d'écart-types respectifs déterminés en fonction des valeurs de pixels d'un groupe de pixels autour du pixel à évaluer.

De préférence, le fond d'une image de détection est estimé en fonction d'au moins une image, dite « image d'estimation », chaque image d'estimation étant acquise préalablement à l'image de détection et étant séparée de ladite image de détection par un délai non nul, égal ou supérieur à un temps prédéfini d'apparition d'une cible. De telles dispositions permettent de mieux estimer le fond, en assurant qu'aucune cible n'est présente dans les images d'estimation.

De préférence, on détermine au moins deux seuils pour chaque pixel à évaluer, et dans lequel la valeur d'un premier seuil en ce pixel est déterminée de sorte à assurer que la probabilité de fausse alarme en ce pixel est théoriquement égale ou inférieure à une première valeur prédéfinie, et la valeur d'un second seuil en ce pixel est déterminée de sorte à assurer que la probabilité de détection en ce pixel est théoriquement égale ou supérieure à une seconde valeur prédéfinie.

La description suivante de modes de mise en oeuvre de l'invention est faite en se référant aux figures, dans lesquelles des références identiques désignent des éléments identiques ou analogues, qui représentent de manière non limitative :

- Figure 1 : un diagramme représentant schématiquement les étapes principales d'un procédé de détection de cibles selon l'invention,
- Figures 2, 3 et 4 : des diagrammes représentant schématiquement des modes particuliers de mise en oeuvre du procédé de détection,
- Figure 5 : un exemple d'évolution temporelle de la valeur d'un pixel d'une image, au cours de l'apparition d'une cible dans ledit pixel.

La présente invention concerne un procédé de détection de cibles dans une image, dite « image de détection », acquise par un capteur embarqué dans un véhicule survolant un corps céleste, de préférence la Terre.

Dans le contexte de l'invention, une image est préférentiellement une image bidimensionnelle, constituée par exemple d'une matrice de pixels. Chaque pixel représente une portion d'une scène observée depuis le véhicule survolant la Terre. Une scène observée correspond à une zone à la surface de la Terre, dont certaines parties sont occultées, notamment par des nuages.

Le capteur est de préférence un capteur optique. Par exemple, il s'agit d'un capteur qui mesure le rayonnement de la scène observée dans le domaine des longueurs d'ondes infrarouges.

Le véhicule, embarquant le capteur optique, peut être de tout type adapté à l'acquisition d'images successives d'une même scène observée. Par exemple, le véhicule est un satellite en orbite autour de la Terre, de préférence une orbite géostationnaire. Suivant un autre exemple non limitatif, le véhicule est un aéronef, tel qu'un hélicoptère.

Par « cible », on entend de manière générale tout événement modifiant le fond de l'image. Le fond de l'image correspond à la partie essentiellement statique de la scène observée, c'est-à-dire dont les variations sont lentes par rapport au temps d'apparition d'une cible (qui dépend du type de cible considéré). La présente invention trouve une application avantageuse dans la détection de cibles du type engin aérien, par exemple un aéronef (avion, hélicoptère) ou un missile en phase propulsée.

La mise en oeuvre du procédé de détection de cibles selon l'invention est par exemple assurée par un dispositif de calcul (microcontrôleur, ordinateur muni d'un microprocesseur, etc.). Le dispositif de calcul comporte des moyens de mémorisation (disque dur magnétique, mémoire flash, disque optique, etc.) dans lesquels est mémorisé un produit programme d'ordinateur, sous la forme d'un ensemble d'instructions de code de programme à exécuter pour mettre en oeuvre les étapes du procédé selon l'invention, ainsi que des images acquises par le capteur optique. Suivant certains modes de réalisation, le dispositif de calcul comporte également des circuits intégrés spécialisés, de type ASIC, FPGA, etc., adaptés à mettre en oeuvre tout ou partie des étapes d'un ou des procédés selon l'invention.

Le dispositif de calcul est de préférence embarqué avec le capteur optique dans le véhicule survolant la Terre dans le cas d'un traitement en temps réel, adapté par exemple à la détection de missiles balistiques. Dans le cas d'un traitement en temps différé, le dispositif de calcul est embarqué avec le capteur optique dans le véhicule, ou bien il est déporté, c'est-à-dire localisé dans une station terrestre ou dans un second véhicule survolant la Terre.

Définitions et notations

Les définitions et notations utilisées dans la suite de la description sont données ci-après. On comprend que le choix d'une convention particulière n'est pas limitatif de l'invention qui pourrait être décrite de manière équivalente en adoptant d'autres conventions sans que l'invention en soit modifiée.

Une image acquise à un instant t est désignée par $y(t)$. L'image $y(t)$ est constituée d'une pluralité de pixels, dont les valeurs sont désignées par $y(p,t)$, où p désigne l'indice d'un pixel de l'image. Par exemple, p est compris entre 1 et $N_L \times N_C$, où $N_L$ désigne le nombre de lignes de pixels de l'image $y(t)$ et $N_C$ désigne le nombre de colonnes de ladite image.

Un pixel $y(p,t)$ correspond principalement à un signal $x(p,t)$ du rayonnement mesuré de la portion de la scène observée, perturbé par un bruit $b(p,t)$ :

$$y(p,t) = x(p,t) + b(p,t) \qquad (1)$$

En l'absence de cible dans le pixel d'indice p, le signal $x(p,t)$ est égal au fond de la scène observée, désigné par $\mu(p,t)$. Si une cible est présente, le signal $x(p,t)$ peut être exprimé comme suit :

$$x(p,t) = \mu(p,t) + c(p,t) \qquad (2)$$

où $c(p,t)$ est le signal mesuré correspondant au rayonnement de la cible.

Le bruit $b(p,t)$ a diverses origines. En particulier, il peut être modélisé comme étant la somme d'un bruit $b_E(p,t)$ d'origine électronique, et un bruit $b_p(p,t)$ d'origine photonique.

Le bruit électronique $b_E(p,t)$ représente un bruit de mesure du capteur optique. Le bruit électronique est généralement modélisé par une variable aléatoire $B_E(p,t)$ gaussienne, qui suit une loi de probabilités Normale $N(0,\sigma^2_E)$, da valeur moyenne nulle et d'écart-type $\sigma_E$ indépendant de la scène observée.

Le bruit photonique $b_p(p,t)$ tient compte du caractère aléatoire de la mesure du nombre de photons. Le bruit photonique est généralement modélisé par une variable aléatoire $B_p(p,t)$ qui suit une loi de probabilités de Poisson. Etant donné le nombre important de photons reçus, et en application de la loi des grands nombres, cette loi de probabilité est parfois approchée par une loi Normale $N(O, x(p,t))$ de valeur moyenne nulle et de variance $x(p,t)$.

En modélisant le bruit photonique par une variable aléatoire gaussienne, et en considérant les réalisations du bruit électronique et du bruit photonique comme indépendantes, le bruit $b(p,t)$ peut être modélisé par une variable aléatoire $B(p,t)$ gaussienne :

$$B(p,t) \sim N(0,\sigma^2_E + x(p,t)) \qquad (3)$$

De manière plus générale, on peut considérer d'autres sources d'erreurs, par exemple liées aux erreurs résiduelles de calibration de biais et de gain, désignées respectivement par $a_B(p)$ et par $a_G(p)$, qui varient peu au cours du temps, mais qui peuvent être différentes d'un pixel à un autre. Dans ce cas, l'expression de la valeur $y(p,t)$ du pixel d'indice p peut s'exprimer sous la forme suivante :

$$y(p,t) = a_G(p) \cdot x(p,t) + b(p,t) \qquad (4)$$

où le bruit $b(p,t)$ peut être modélisé par une variable aléatoire gaussienne :

$$B(p,t) \sim N(a_B(p),\sigma^2_E + a_p \cdot x(p,t)) \qquad (5)$$

En pratique, les erreurs de calibration $a_B(p)$ et $a_G(p)$ peuvent être estimées en tout pixel en mettant en oeuvre des procédés connus de l'homme de l'art. A des fins de clarté de la description, mais à titre nullement limitatif de l'invention, on considère dans la suite de la description que $a_B(p)$ est égal à zéro et que $a_G(p)$ est égal à un. Les équations données ci-après peuvent être généralisées à des valeurs quelconques de $a_B(p)$ et de $a_G(p)$, en partant des équations (4) et (5).

Procédé de détection de cibles

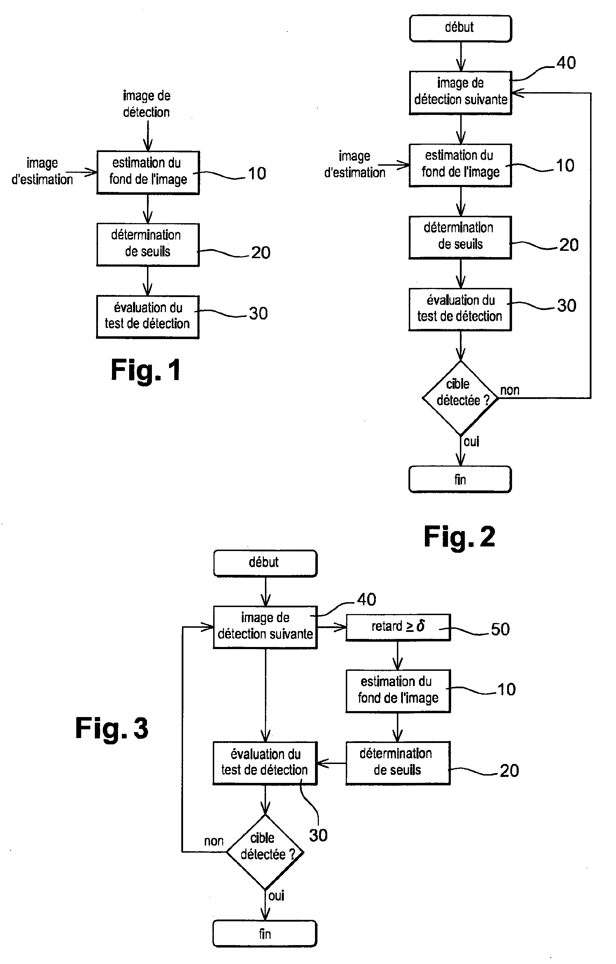

La figure 1 représente schématiquement le procédé de détection de cibles dans une image, dite « image de détection ».

Le procédé de détection de cibles comporte principalement une étape 10 d'estimation du fond de l'image de détection, une étape 20 de détermination de seuil pour chaque pixel à évaluer, et une étape 30 d'évaluation d'un test de détection par rapport aux seuils déterminés, en chaque pixel à évaluer de l'image de détection.

Par « à évaluer », on entend que la détection de cibles peut être restreinte à un sous-ensemble de pixels d'une image de détection, ou qu'au contraire la détection peut être effectuée sur toute l'image de détection. Par exemple, dans le cas d'une détection de missile en phase propulsée, on peut limiter l'évaluation du test de détection à un sous-ensemble de pixels représentant une zone autour d'une base de tir de missiles.

Il est à noter que l'ordre d'exécution des différentes étapes du procédé de détection n'est pas limitatif de l'invention, et qu'un ordre particulier ne constitue qu'une variante d'implémentation du procédé de détection.

On note toutefois que, pour un pixel donné, le fond dudit pixel doit être estimé (étape 10) avant de déterminer la valeur du seuil associé (étape 20), seuil qui doit être déterminé avant d'évaluer le test de détection (étape 30) pour ledit pixel donné.

Lorsque l'on considère tous les pixels à évaluer, il est possible par exemple d'estimer le fond de l'image de détection pour tous les pixels à évaluer, de déterminer tous les seuils associés, puis d'évaluer le test de détection pour tous les pixels à évaluer. Suivant un autre exemple, les étapes 10 d'estimation, 20 de détermination et 30 d'évaluation sont exécutées successivement pour chaque pixel à évaluer. Suivant encore un autre exemple, l'étape 10 d'estimation est exécutée pour tous les pixels à évaluer, puis les étapes 20 de détermination de seuil et 30 d'évaluation de test de détection sont exécutées successivement pour chaque pixel à évaluer.

Il est à noter que le procédé de détection peut comporter d'autres étapes, comme par exemple une étape préalable, dite « de registration », au cours de laquelle les images acquises sont recalées les unes par rapport aux autres, pour compenser des décalages introduits par les mouvements parasites de la ligne de visée du capteur optique au cours de l'acquisition. L'étape de registration, non représentée sur les figures, peut être mise en oeuvre selon tout procédé de registration connu de l'homme de l'art.

Tel que représenté sur la figure 2, les étapes du procédé de détection sont de préférence exécutées de façon récurrente, au moins tant qu'on n'a pas détecté de cible, afin de surveiller si une cible apparaît et, le cas échéant, signaler une alarme. Cela revient à acquérir 40 et à traiter régulièrement une nouvelle image de détection, par exemple de façon sensiblement périodique.

Il est à noter que les étapes du procédé peuvent, lorsqu'elles sont récurrentes, avoir des périodicités différentes. En particulier, l'évaluation du test de détection (étape 30) se fait de préférence à chaque nouvelle image de détection, tandis que l'estimation du fond (étape 10) peut se faire à chaque nouvelle image de détection, ou toutes les deux, trois ou plus images de détection, suivant la vitesse de variation de la scène observée.

<u>a) Etape 10 d'estimation du fond de l'image de détection</u>

Tel que décrit précédemment, le fond de l'image de détection correspond à la partie de la scène observée dont les variations sont lentes par rapport au temps prédéfini d'apparition d'une cible. L'étape 10 vise à calculer une estimation $\mu e(p,t)$ du fond $\mu(p,t)$ pour chaque pixel à évaluer.

Dans un mode préféré de mise en oeuvre de l'étape 10, le fond de l'image de détection est estimé d'après une image, ou une séquence d'images, dites « images d'estimation », acquises à différents instants dans le temps.

Les images d'estimation représentent sensiblement la même scène observée que l'image de détection, et sont acquises par un capteur se trouvant dans le plan focal du capteur optique ayant servi à acquérir l'image de détection. De préférence, lesdites images d'estimation sont acquises par le même capteur optique que celui ayant servi à acquérir l'image de détection.

Rien n'exclut que l'image de détection soit également une image d'estimation, c'est-à-dire que l'image de détection soit également utilisée au cours de l'étape 10 pour estimer son propre fond.

Dans un mode préféré de mise en oeuvre du procédé de détection, illustré sur la figure 3, les images d'estimation sont des images acquises antérieurement à l'acquisition de l'image de détection courante.

De préférence, les images d'estimation sont séparées dans le temps de l'image de détection courante par un délai non nul, égal ou supérieur au temps d'apparition $\delta$ d'une cible.

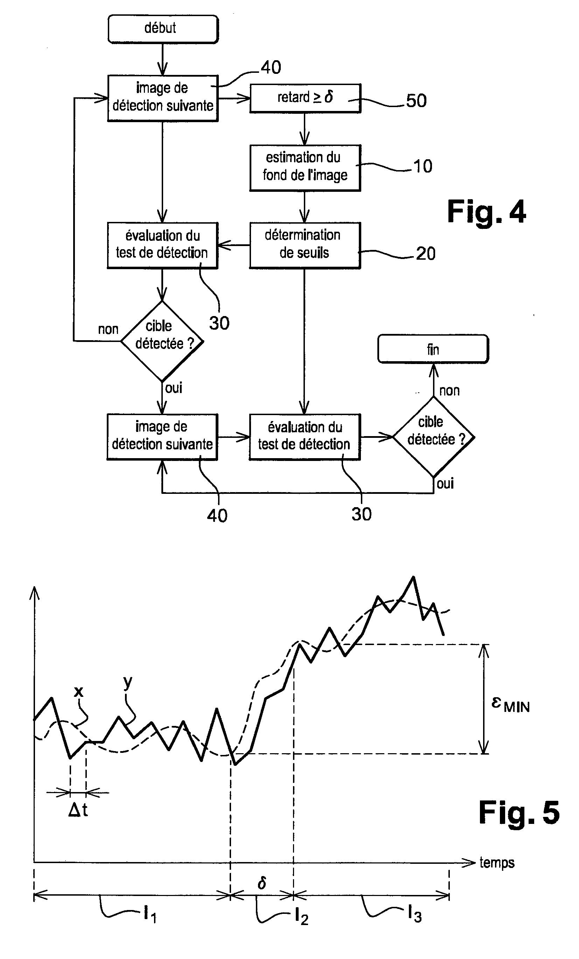

En pratique, l'apparition de la cible dans un ou plusieurs pixels d'une image est progressive, tel qu'illustré par la figure 5. Le temps d'apparition $\delta$ d'une cible dépend du type de cible, et correspond au temps nécessaire pour que le signal $c(p,t)$ soit égal ou supérieur à un niveau minimal, désigné par $\varepsilon_{MIN}$, prédéfini par exemple en fonction d'une cible de référence correspondant théoriquement à un pire cas pour la détection.

Dans la figure 5, on a représenté trois intervalles de temps, respectivement $I_1$, $I_2$ et $I_3$, ainsi que l'évolution des valeurs $y(p,t)$ (désigné par « y ») et $x(p,t)$ (désigné par « x ») en fonction du temps.

Les images acquises au cours de l'intervalle $I_1$ ne comportent pas de cible, les images acquises au cours de l'intervalle $I_3$ comportent une cible, et l'intervalle $I_2$ correspond à un intervalle de transition, au cours duquel la cible apparaît, de durée égale à $\delta$.

On comprend qu'il est avantageux d'estimer le fond de l'image de détection à partir d'images dans lesquelles il n'y a pas de cible présente, c'est-à-dire principalement en fonction d'images acquises au cours de l'intervalle $I_1$.

Si on considère des images d'estimation acquises à des instants antérieurs d'au moins la durée $\delta$ à celui d'acquisition de l'image de détection courante, et si on n'a pas détecté de cible dans des images de détection acquises antérieurement au cours de l'intervalle de durée $\delta$, on assure théoriquement que l'estimation du fond est obtenue à partir d'images d'estimation dans lesquelles il n'y a ni cible présente, ni cible en cours d'apparition.

En pratique, le temps d'apparition $\delta$ est par exemple préalablement défini comme étant le temps d'apparition d'une cible de référence au-dessus d'un nuage, une cible de référence étant une cible dont on connaît les caractéristiques (ergol utilisé, trajectoire en phase propulsée, etc.). Le temps d'apparition $\delta$ est par exemple de l'ordre de quelques centaines de millisecondes à quelques secondes.

De préférence, tel qu'illustré par la figure 3, les images d'estimation sont, au moins en partie, des images de détection antérieures, c'est-à-dire des images pour lesquelles le test de détection a déjà été évalué.

Par exemple, tel que représenté sur la figure 3, le procédé comporte une étape 50 au cours de laquelle on retarde les images de détection avant de les utiliser pour estimer le fond à utiliser pour des images détection ultérieures. Les images de détection ainsi retardées sont par exemple stockées dans les moyens de mémorisation susmentionnés.

La figure 4 représente un mode particulier de mise en oeuvre du procédé de détection, dans lequel la détection s'effectue principalement en deux phases.

Au cours de la première phase, les étapes principales du procédé de détection, l'étape 10 d'estimation, l'étape 20 de détermination de seuils et l'étape 30 d'évaluation du test de détection, sont exécutées tant qu'une cible n'a pas été détectée.

Lorsqu'une cible a été détectée dans une image de détection, la seconde phase consiste principalement à assurer le suivi d'une cible détectée. La différence principale entre la première et la seconde phase réside dans le fait que l'étape 10 d'estimation du fond n'est plus exécutée, afin d'éviter d'estimer le fond sur des images susceptibles de comporter une cible. Par exemple, on utilise la même estimation du fond que celle utilisée lorsque la cible a été détectée.

De préférence, et tel que représenté sur la figure 5, l'étape 20 de détermination de seuils n'est plus exécutée au cours de la seconde phase. Par exemple, on utilise les mêmes les seuils que ceux utilisés lorsque la cible a été détectée.

Si au cours de la seconde phase, la cible n'est plus détectée, le procédé de détection s'arrête ou rebascule sur la première phase.

Suivant un mode préféré de mise en oeuvre du procédé de détection, non illustré par les figures, on estime également, au cours de l'étape 10 d'estimation, des caractéristiques statistiques de l'erreur d'estimation du fond. Suivant un premier exemple, on estime l'écart- type de l'erreur en chaque pixel, désigné par $\sigma_{EST}(p, t)$. Suivant un autre exemple non limitatif, on estime une fonction représentative de la densité de probabilité de l'erreur d'estimation du fond.

L'étape 10 d'estimation s'appuie de préférence sur un modèle d'évolution du fond de l'image, de préférence un modèle Markovien, par exemple d'ordre 1, en chaque pixel d'indice p :

$$x(p,t+\Delta t) = x(p,t) + w(p,t) \qquad (6)$$

expression dans laquelle :

- $\Delta t$ est la période d'acquisition entre deux images consécutives d'une séquence d'images ; on considère, à titre nullement limitatif de l'invention, que la période d'acquisition est sensiblement constante,
- $w(p, t)$ est un terme d'évolution, modélisé par une variable aléatoire gaussienne de moyenne nulle et d'écart- type $\sigma_{EVOL}(p, t)$.

Il est connu, en particulier de la publication scientifique précitée « Detecting small moving objects using temporal hypothesis testing », des auteurs A. Tzannes et D.H. Brooks (IEEE Transactions on Aerospace and Electronics Systems, vol. 38, n° 2, Avril 2002), qu'un tel modèle d'évolution temporelle est adapté notamment aux images de nuages dans le domaine infrarouge.

De manière plus générale, d'autres modèles d'évolution peuvent être considérés, et le choix d'un modèle particulier ne constitue qu'une variante d'implémentation de l'invention.

A partir du modèle d'évolution choisi, on utilise un estimateur qui fournit à la fois une estimation $\mu e(p, t)$ du fond $\mu(p, t)$ de l'image de détection, et une estimation des caractéristiques de l'erreur d'estimation, par exemple une estimation $\sigma e_{EST}(p, t)$ de l'écart- type de l'erreur d'estimation $\sigma_{EST}(p, t)$ ou une fonction représentative de la densité de probabilité de l'erreur d'estimation.

Un estimateur du type filtrage de Kalman est particulièrement adapté au cas d'un modèle Markovien d'évolution temporelle du fond. Un tel estimateur peut prendre en compte plusieurs images d'estimation et fournir une estimation du fond et, le cas échéant, une estimation des caractéristiques de l'erreur d'estimation.

De préférence, l'estimation est faite au moyen d'un filtre de Kalman du type « sans odeur » (« Unscented Kalman Filter » ou UKF dans la littérature anglo-saxonne). Un tel filtre de Kalman sans odeur est connu par exemple du livre « The Unscented Kalman Filter », des auteurs E. Wan et R.V. der Merwe, publié aux éditions Wiley.

De manière plus générale, l'étape 10 d'estimation peut mettre en oeuvre tout procédé d'estimation du fond d'images et, le cas échéant, d'estimation du bruit d'estimation, connu de l'homme de l'art.

b) Etapes 20 de détermination de seuils et 30 d'évaluation du test de détection

Selon l'invention, on définit une pluralité de seuils $\eta(p,t)$, au moins un seuil par pixel, dont la valeur est déterminée en fonction de l'estimation $\mu e(p,t)$ du fond $p(p,t)$ de l'image de détection.

Au cours de l'étape 30 d'évaluation, on évalue un test de détection en chaque pixel à évaluer, test de détection qui dépend du fond estimé pour le pixel évalué.

Le test de détection est de préférence un test statistique d'hypothèses de type Neyman-Pearson, ou son extension sous forme de rapport de vraisemblance généralisée, dans lequel on considère au moins deux hypothèses $H_0(p,t)$ et $H_1(p,t)$ :

- $H_0(p,t)$ : il n'y a pas de cible à l'instant t dans le pixel d'indice p,
- $H_1(p,t)$: une cible est présente à l'instant t dans le pixel d'indice p.

Un test de détection du type test statistique d'hypothèses est généralement basé sur le choix d'une fonction de test, appelée fonction T dans la suite de l'exposé, construite à partir des mesures effectuées. L'évaluation du test de détection revient à calculer la valeur de la fonction de test T à partir des mesures considérées, et à comparer ladite valeur à un seuil. Suivant un exemple non limitatif, l'hypothèse $H_0(p,t)$ est vérifiée si la valeur de la fonction de test T est inférieure au seuil, et l'hypothèse $H_1(p,t)$ est vérifiée si la valeur de la fonction de test T est supérieure au seuil.

Le calcul du seuil dépend avantageusement du test de détection. Plus particulièrement, il dépend de la fonction T de test choisie.

D'un point de vue théorique, il est possible de définir un test de détection optimal, dit « test du rapport de vraisemblance généralisée », à partir d'un modèle du signal y(p,t) mesuré. Ce type de test est supposé connu de l'homme de l'art, et sa formulation théorique n'est pas rappelée.

Toutefois, la mise en oeuvre du test du rapport de vraisemblance généralisée est difficile en pratique, du fait d'une complexité analytique élevée, qui est incompatible avec les capacités de calcul actuelles, en particulier les capacités des dispositifs de calcul actuellement embarqués dans des satellites, et/ou avec des contraintes d'évaluation en temps réel ou quasi- réel (en particulier dans le cas d'une détection de missiles balistiques) .

Avantageusement, on considère certaines approximations du test optimal de détection visant à réduire la complexité analytique de son évaluation. On décrit ci- après un exemple non limitatif de test de détection dont la complexité analytique est adaptée aux capacités des dispositifs de calcul actuellement embarqués dans des satellites.

De préférence, le calcul des seuils $\eta(p,t)$ tient compte de la présence du bruit photonique $b_p(p,t)$ dans le signal y(p,t), au moyen d'un modèle de bruit photonique. De manière plus générale, le calcul des seuils $\eta(p,t)$ peut tenir compte de tout autre type de bruit instationnaire. Dans la suite de la description, on se place, à titre nullement limitatif, dans le cas où un modèle de bruit photonique est effectivement pris en compte.

Ledit test de détection est obtenu en considérant tout d'abord une approximation du modèle théorique du bruit photonique (variable aléatoire qui suit une loi de Poisson), qu'on modélise par une variable aléatoire gaussienne N (0, x (p, t) ), tel que décrit précédemment.

Compte tenu des modèles choisis pour le bruit électronique et le bruit photonique, la valeur y(p,t) du pixel d'indice p peut être considérée comme la réalisation d'une variable aléatoire Y(p,t) gaussienne :

$$Y(p,t) \sim N(x(p,t), \sigma^2_E + x(p,t)) \qquad (7)$$

où x(p,t) est égal à $\mu(p,t)$ en l'absence de cible, à (p(p,t) + c(p,t)) en présence d'une cible. Le test de détection proposé est ensuite obtenu en approchant le test optimal formulé d'après ce modèle de y(p,t).

Le test de détection proposé dépend principalement d'un niveau minimal $\varepsilon_{MIN}$ du signal c(p,t) qui serait mesuré pour une cible, de l'écart-type $\sigma_E$, et du fond $\mu(p,t)$ de l'image de détection.

A titre nullement limitatif, on considère que le niveau minimal $\varepsilon_{MIN}$ et l'écart-type $\sigma_E$ sont connus a priori : le niveau minimal $\varepsilon_{MIN}$ est par exemple prédéterminé en fonction d'une cible de référence correspondant théoriquement à un pire cas pour la détection, et l'écart-type $\sigma_E$ est par exemple prédéterminé par calibration du capteur optique.

En pratique, le fond $\mu(p,t)$ de l'image de détection est estimé au cours de l'étape 10 d'estimation, qui fournit une estimation $\mu e(p,t)$ dudit fond, utilisée dans les différents calculs décrits ci-après.

Dans un mode préféré de mise en oeuvre, la fonction T de test optimale au sens précédent peut être approximée comme suit :

- si $y(p,t) - \mu e(p,t) \geq \varepsilon_{MIN}$:

$$T(y(p,t), \mu e(p,t)) = \frac{(y(p,t) - \mu e(p,t))^2}{\sigma_E^2 + \mu e(p,t)} \qquad (8)$$

- si $y(p,t) - \mu e(p,t) < \varepsilon_{MIN}$ :

$$T(y(p,t),\mu e(p,t)) = \frac{(y(p,t)-\mu e(p,t))^2}{\sigma_E^2 + \mu e(p,t)} - \frac{(y(p,t)-\mu e(p,t)-\varepsilon_{MIN})^2}{\sigma_E^2 + \mu e(p,t) + \varepsilon_{MIN}} \qquad (9)$$

La valeur de la fonction de test T en un pixel donné est en fait la différence des distances de la mesure en ce pixel aux valeurs que cette mesure devrait avoir suivant respectivement les au moins deux hypothèses du test, c'est-à-dire la valeur du fond en ce pixel s'il n'y a pas de cible, et la valeur du fond en ce pixel auquel s'ajoute le signal $\varepsilon_{MIN}$ de la cible s'il y a une cible. On peut en effet écrire cette fonction de test T comme la différence :

$$T(y(p,t),\mu e(p,t)) = D_0(y(p,t),\mu e(p,t)) - D_1(y(p,t),\mu e(p,t)) \qquad (10)$$

où la distance $D_0$ pour l'hypothèse $H_0(p,t)$ d'absence de cible est donnée par :

$$D_0(y(p,t),\mu e(p,t)) = \frac{(y(p,t)-\mu e(p,t))^2}{\sigma_E^2 + \mu e(p,t)} \qquad (11)$$

et la distance $D_1$ pour l'hypothèse $H_1(p,t)$ de présence de cible est donnée par :

$$D_1(y(p,t),\mu e(p,t)) = \begin{cases} \dfrac{(y(p,t)-\mu e(p,t)-\varepsilon_{MIN})^2}{\sigma_E^2 + \mu e(p,t) + \varepsilon_{MIN}} & \text{si } y(p,t) < \mu e(p,t) + \varepsilon_{MIN} \\ 0 & \text{sinon} \end{cases} \qquad (12)$$

Dans cet exemple, la distance est avantageusement quadratique et pondérée par la valeur du signal de manière à tenir compte de la nature en partie photonique du bruit d'acquisition. On comprend que cet exemple n'est pas limitatif de l'invention, et qu'un autre type de distance peut être utilisé.

Considérons un seuil $\eta$ (p, t) tel que si T (y (p, t), $\mu$e (p, t) ) est supérieur à ce seuil $\eta$ (p, t), on conclut que l'hypothèse $H_1$ (p, t) est la plus vraisemblable et dans le cas contraire, on conclut que c'est l'hypothèse $H_0$ (p, t) qui est la plus vraisemblable.

Dans le cadre de l'invention, on cherche principalement à maîtriser la probabilité de fausse alarme. Pour déterminer le lien entre le seuil $\eta$ (p, t) et la probabilité de fausse alarme, on considère la probabilité de franchissement du seuil $\eta$ (p, t) par la fonction T. La probabilité de franchissement d'un seuil $\eta$ (p, t) par la fonction T est désignée par h ($\eta$ (p, t), $\mu$e (p, t), x (p, t) ) .

A des fins de clarté de la description, les paramètres (p,t) sont temporairement omis. La probabilité de franchissement d'un seuil $\eta$ par la fonction T, désignée par $h(\eta,\mu e,x)$ peut alors s'exprimer :

$$h(\eta,\mu e,x) = prob(T(Y,\mu e) \geq \eta) \qquad (13)$$

expression dans laquelle Y est distribué tel que décrit à l'expression (7).

En remplaçant la fonction T par les expressions (8) et (9), la probabilité de franchissement d'un seuil $\eta$ peut s'exprimer de la façon suivante :

$$h(\eta,\mu e,x) = prob(Y \geq g_1(\eta,\mu e)) + prob(g_2(\eta,\mu e) \leq Y \leq \mu e + \varepsilon_{MIN}) \qquad (14)$$

$$g_1(\eta,\mu e) = \max\left(\mu e + \sqrt{\eta \cdot (\sigma_E^2 + \mu e)}, \mu e + \varepsilon_{MIN}\right) \tag{15}$$

$$g_2(\eta,\mu e) = -\sigma_E^2$$
$$+ \sqrt{(\sigma_E^2 + \mu e)^2 + \varepsilon_{MIN} \cdot (\sigma_E^2 + \mu e) + \frac{\eta}{\varepsilon_{MIN}} \cdot (\sigma_E^2 + \mu e + \varepsilon_{MIN}) \cdot (\sigma_E^2 + \mu e)} \tag{16}$$

Les expressions de $g_1(\eta,\mu e)$ et de $g_2(\eta,\mu e)$ se déduisent de la fonction T de test donnée aux expressions (8) et (9), en constatant que lorsque $(y - \mu e \geq \varepsilon_{MIN})$, la probabilité d'avoir $T(Y,\mu e)$ égal ou supérieur à $\eta$ est égale à :

$$\text{prob}\left(\frac{(Y - \mu e)^2}{\sigma_E^2 + \mu e} \geq \eta\right) \tag{17}$$

et que lorsque $(y - \mu e < \varepsilon_{MIN})$, la probabilité d'avoir $T(Y,\mu e)$ égal ou supérieur à $\eta$ est égale à :

$$\text{prob}\left(\frac{(Y - \mu e)^2}{\sigma_E^2 + \mu e} - \frac{(Y - \mu e - \varepsilon_{MIN})^2}{\sigma_E^2 + \mu e + \varepsilon_{MIN}} \geq \eta\right) \tag{18}$$

Or, compte tenu de l'hypothèse (7), la probabilité d'avoir Y supérieur à une valeur p est donnée par :

$$\text{prob}(Y \geq \rho) = Q(\rho, x, \sigma^2_E + x) \tag{19}$$

où Q est la fonction de répartition d'une Gaussienne, pouvant être exprimée sous la forme suivante :

$$Q(\lambda,m,s) = \frac{1}{\sqrt{2\pi s}} \int_\lambda^\infty \exp\left(-\frac{(z-m)^2}{s}\right) dz \tag{20}$$

En combinant les équations (14) et (19), on obtient :

$$h(\eta,\mu e,x) = Q(g_1(\eta,\mu e), x, \sigma^2_E + x)$$
$$+ Q(g_2(\eta,\mu e), x, \sigma^2_E + x) - Q(\mu e + \varepsilon_{MIN}, x, \sigma^2_E + x) \tag{21}$$

La fonction h représente donc la probabilité que la fonction T dépasse un seuil $\eta$, lorsque le fond est égal à $\mu e$ et que le signal est égal à x.

On peut considérer que la probabilité de fausse alarme $P_{FA}$ (p, t) en un pixel p et un instant donné t est égale à $P_{FA}$ (p, t) = h ($\eta$ (p, t), $\mu e$ (p, t), $\mu$ (p, t) ), c'est- à- dire la probabilité que le test d'hypothèse déclenche l'alarme (la fonction T de test dépassant le seuil) alors qu'il n'y a pas de cible en ce pixel (x (p, t) = $\mu$ (p, t) ) .

Suivant le même principe, la probabilité de détection est donnée par h ($\eta$ (p, t), $\mu e$ (p, t), $\mu$ (p, t) +c (p, t) ) qui est par définition la probabilité d'avoir T (y (p, t), $\mu e$ (p, t) ) supérieur à $\eta$ (p, t) en présence d'une cible de niveau c (p, t) .

Dans un mode préféré de mise en oeuvre du procédé, la valeur du seuil $\eta$(p,t) est déterminée de sorte à assurer la maîtrise de la probabilité de fausse alarme au sein d'une même image. Par exemple, les valeurs des différents seuils, calculés pour une même image de détection, sont déterminées de sorte à avoir théoriquement la même probabilité de fausse alarme (égale ou inférieure à une valeur prédéfinie $P_{FA0}$, par exemple 1%) en tout pixel à évaluer de l'image de détection.

Au cours de l'étape 20 de détermination du seuil pour le pixel d'indice p de l'image de détection, on détermine par exemple la valeur du seuil $\eta$ (p,t) pour laquelle la probabilité de fausse alarme est théoriquement égale à une valeur prédéfinie $P_{FA0}$, ce qui revient à déterminer le seuil $\eta(p,t)$ qui satisfait l'expression suivante :

$$\eta(p,t) = h^{-1}(P_{FA0}, \mu e(p,t), \mu(p,t)) \qquad (22)$$

La valeur du seuil $\eta$ (p, t) est par exemple calculée en considérant que le fond $\mu$ (p, t) et son estimation $\mu e$ (p, t) sont égaux. Ainsi, en remplaçant $\mu$ (p, t) par son estimation $\mu e$ (p, t) dans l'expression (22), on peut déterminer des valeurs de la fonction h ($\eta$ (p, t), $\mu e$ (p, t), $\mu e$ (p, t) ) pour différentes valeurs du seuil $\eta$ (p, t), et sélectionner le seuil $\eta$ (p, t) pour lequel la probabilité de fausse alarme $P_{FA0}$. Lesdites valeurs de la fonction h ($\eta$ (p, t), $\mu e$ (p, t), $\mu e$ (p, t) ) sont de préférence préalablement déterminées, pour différentes valeurs de $\mu e$ (p, t), et mémorisées dans des moyens de mémorisation.

Dans un mode préféré de mise en oeuvre, lorsque l'on a estimé des caractéristiques de l'erreur d'estimation du fond de l'image de détection, celles-ci sont également utilisées pour déterminer les seuils en chaque pixel.

Dans un premier exemple, les caractéristiques de l'erreur d'estimation du fond de l'image sont estimées sous la forme d'une estimation $\sigma e_{EST}$ (p, t) de l'écart- type $\sigma_{EST}$ (p, t) de l'erreur d'estimation du fond, et le seuil $\eta$ (p, t) est déterminé comme étant égal à $\eta$ (p, t) = h$^{-1}$ ($P_{FA0}$, $\mu r$ (p, t), $\mu r$ (p, t) ) . Dans cette expression, $\mu r$ (p, t) est un fond utilisé en remplacement de l'estimation $\mu e$ (p, t), déterminé en fonction notamment de ladite estimation $\mu e$ (p, t) dudit fond et de l'estimation $\sigma e_{EST}$ (p, t) de l'écart- type de l'erreur d'estimation du fond. De préférence, le fond de remplacement $\mu r$ (p, t) est une surestimation du fond, obtenue en ajoutant à $\mu e$ (p, t) une valeur représentative de l'erreur d'estimation du fond. Avantageusement, on prendra $\mu r$ (p, t) égal à ($\mu e$ (p, t) + k·$\sigma e_{EST}$ (p, t) ), où k est un paramètre positif ou nul prédéfini. De préférence, on prend k égal à deux ou trois. Le paramètre k peut être choisi pour contrôler et limiter le taux de pixels pour lesquels la probabilité de fausse alarme observée sera supérieure à la valeur prédéfinie $P_{FA0}$. Par exemple, dans le cas d'une surestimation du fond par k·$\sigma e_{EST}$ (p, t), avec k égal à trois, la probabilité de fausse alarme sera inférieure à $P_{FA0}$ pour 99% des pixels.

Dans un second exemple, les caractéristiques de l'erreur d'estimation du fond de l'image sont estimées sous la forme d'une fonction représentative de la densité de probabilité de ladite erreur d'estimation.

On peut par exemple considérer que l'erreur d'estimation suit une loi Normale N (0, $\sigma^2_{EST}$ (p, t) ), qu'on approche par une loi Normale N (0, $\sigma e^2_{EST}$ (p, t) ) après avoir déterminé une estimation $\sigma e_{EST}$ (p, t) de l'écart- type $\sigma_{EST}$ (p, t) de l'erreur d'estimation du fond. Cette loi peut être intégrée dans le calcul de la probabilité de fausse alarme $P_{FA}$ (p, t), en considérant que le fond $\mu$ (p, t) est la réalisation d'une variable aléatoire M (p, t) distribuée suivant une loi normale N ($\mu e$ (p, t), $\sigma e^2_{EST}$ (p, t) ) .

Dans ce cas, la probabilité de fausse alarme $P_{FA}$ (p, t) sera donnée par la valeur de la fonction k ($\eta$ (p, t), $\mu e$(p, t), $\sigma e_{EST}$ (p, t) ) égale par définition à :

$$k(\eta(p,t),\mu e(p,t),\sigma e_{EST}(p,t)) = E\big[prob\big(T(Y(p,t),\mu e(p,t)) \geq \eta(p,t)\big|M(p,t)\big)\big] \qquad (23)$$

La fonction k peut s'exprimer sous la forme :

$$k(\eta(p,t),\mu e(p,t),\sigma e_{EST}(p,t)) =$$

$$\int_{-\infty}^{+\infty} h(\eta(p,t),\mu e(p,t),\mu) \frac{1}{\sigma e_{EST}(p,t)\sqrt{2\pi}} \exp\left(-\frac{(\mu-\mu e)^2}{2\sigma e^2_{EST}(p,t)}\right) d\mu \qquad (24)$$

L'intégrale de l'expression (24) n'est pas calculable analytiquement, mais peut être approchée en utilisant toute technique d'intégration numérique connue de l'homme de l'art. Suivant un exemple non limitatif, cette intégrale est approchée en mettant en oeuvre une technique classique de Monte Carlo par pondération de vraisemblance. Pour des valeurs de $\mu e$ (p, t) et $\sigma e_{EST}$ (p, t) données, on génère un nombre Ne d'échantillons $\mu_i$ (typiquement de l'ordre de 10000 échantillons) suivant la loi Normale N ($\mu e$ (p, t), f$^2$.$\sigma e^2_{EST}$ (p, t) ) où f est un facteur d'amplification de $\sigma e_{EST}$ (p, t) permettant, de manière connue, d'améliorer l'approximation de l'intégrale. Ladite intégrale peut ensuite être approximée comme suit :

$$k\big(\eta(p,t),\mu e(p,t),\sigma e_{EST}(p,t)\big) \approx \sum_{i=1}^{Ne} \omega_i \cdot h\big(\eta(p,t),\mu e(p,t),\mu_i\big) \qquad (25)$$

expression dans laquelle :

$$\omega_i = \frac{1}{Ne} \cdot exp\left(\left(\frac{1}{f^2}-1\right)\frac{(\mu e(p,t)-\mu_i)^2}{2 \cdot \sigma e_{EST}^2(p,t)}\right) \qquad (26)$$

Comme précédemment, on peut déterminer des valeurs de la fonction k ($\eta$ (p, t), $\mu$e (p, t), $\sigma e_{EST}$ (p, t) ) pour différentes valeurs du seuil $\eta$ (p, t), et sélectionner le seuil $\eta$ (p, t) pour lequel on obtient une probabilité de fausse alarme sensiblement égale à $P_{FA0}$. Lesdites valeurs de la fonction k ($\eta$ (p, t), $\mu$e(p, t), $\sigma e_{EST}$ (p, t) ) sont de préférence préalablement déterminées, pour différentes valeurs de $\mu$e (p, t) et de $\sigma e_{EST}$ (p, t), et mémorisées dans des moyens de mémorisation.

Pour estimer des probabilités de fausse alarme autour de 1%, on considère de préférence une valeur de f comprise entre deux et dix.

On comprend donc qu'en estimant des caractéristiques de l'erreur d'estimation et en déterminant les seuils en fonction des caractéristiques estimées, il sera possible de mieux maîtriser la probabilité de fausse alarme. Par exemple, les seuils sont déterminés de sorte que la probabilité de fausse alarme est théoriquement la même en chaque pixel à évaluer, ou de sorte que la probabilité de fausse alarme est théoriquement inférieure à une valeur prédéfinie en chaque pixel à évaluer.

Extension du procédé au cas de plusieurs images de détection

De manière plus générale, on peut utiliser, au cours de l'étape 30 d'évaluation du test de détection, une pluralité de mesures, c'est-à-dire une pluralité d'images de détection, que l'on aura pris soin de recaler les unes par rapport aux autres, pour compenser des décalages introduits par les mouvements parasites de la ligne de visée du capteur optique au cours de l'acquisition. Dans la suite du paragraphe, on suppose que cette étape de registration est effectuée au préalable.

Par exemple, on peut considérer, de manière non limitative, M (M > 1) images de détection acquises successivement avec une période $\Delta t$, formant un ensemble désigné par $y^M$ (t), comprenant les images y (t+m$\Delta t$), $0 \le m \le$ M-1. On désigne également par $y^M$ (p, t) l'ensemble des pixels y (p, t+m$\Delta t$), $0 \le m \le$ M- 1.

Un exemple de fonction $T^M$ de test, approchant la fonction optimale et prenant en compte des images de détection successives pour déterminer si une cible est apparue, peut être exprimé comme suit :

- si ym(p,t) - $\mu$e(p,t) $\ge \varepsilon_{MIN}$ :

$$T^M(y^M(p,t),\mu e(p,t)) = \sum_{m=0}^{M-1} \frac{(y(p,t+m\Delta t)-\mu e(p,t))^2 - (y(p,t+m\Delta t)-ym(p,t))^2}{\sigma_E^2 + \mu e(p,t)} \quad (27)$$

- si ym(p,t) - $\mu$e(p,t) $< \varepsilon_{MIN}$ :

$$T^M(y^M(p,t),\mu e(p,t)) = \sum_{m=0}^{M-1} \frac{(y(p,t+m\Delta t)-\mu e(p,t))^2 - (y(p,t+m\Delta t)-\mu e(p,t)-\varepsilon_{MIN})^2}{\sigma_E^2 + \mu e(p,t)} \quad (28)$$

expressions dans lesquelles ym(p,t) désigne la valeur moyenne des pixels de l'ensemble $y^M$(p,t), pouvant être exprimée sous la forme :

$$ym(p,t) = \sum_{m=0}^{M-1} \frac{y(p,t+m\Delta t)}{M} \qquad (29)$$

Compte tenu de l'expression (7), la valeur ym (p, t) peut être considérée comme la réalisation d'une variable aléatoire Ym (p, t) gaussienne :

$$Ym(p,t) \sim N(xm(p,t),\sigma^2_{MOY}(p,t)) \qquad (30)$$

expression dans laquelle $\sigma^2_{MOY}$ (p, t) est égal à ($\sigma^2_E$ + xm (p, t) ) /M, et xm (p, t) est égal à :

$$xm(p,t) = \mu m(p,t) = \sum_{m=0}^{M-1} \frac{\mu(p,t+m\Delta t)}{M} \qquad (31)$$

en l'absence de cible, et à :

$$xm(p,t) = \sum_{m=0}^{M-1} \frac{\mu(p,t+m\Delta t)+c(p,t+m\Delta t)}{M} \qquad (32)$$

en présence d'une cible.

Si $T^M$ ($y^M$ (p, t), $\mu e$ (p, t) ) est supérieur à $\eta$ (p, t), on conclut que l'hypothèse $H_1$ (p, t) est la plus vraisemblable. Dans le cas contraire, on conclut que c'est l'hypothèse $H_0$ (p, t) qui est la plus vraisemblable.

Comme précédemment, les paramètres (p, t) sont temporairement omis à des fins de clarté de la description. Pour déterminer la valeur du seuil $\eta$, on exprime la probabilité de franchissement d'un seuil, désignée par $h^M$ ($\eta$, $\mu e$, xm) :

$$h^M(\eta,\mu e,xm) = prob(T^M(y^M,\mu e) \geq \eta) \qquad (33)$$

La probabilité $h^M$ ($\eta$, $\mu e$, xm) de franchissement d'un seuil peut également s'exprimer de la façon suivante :

$$h^M(\eta,\mu e,xm) = prob(ym \geq g^M_1(\eta,\mu e))$$
$$+ prob(g^M_2(\eta,\mu e)) \leq ym \leq \mu e + \varepsilon_{MIN}) \qquad (34)$$

expression dans laquelle :

$$g^M_1(\eta,\mu e) = \mu e + max\left(\sqrt{\frac{\eta \cdot (\sigma^2_E + \mu e)}{M}}, \varepsilon_{MIN}\right) \qquad (35)$$

$$g^M_2(\eta,\mu e) = \mu e + \frac{\varepsilon_{MIN}}{2} + \frac{2 \cdot \eta \cdot (\sigma^2_E + \mu e)}{\varepsilon_{MIN} \cdot M} \qquad (36)$$

La probabilité d'avoir ym supérieur à une valeur p est donnée par :

$$\text{prob}(ym \geq \rho) = Q(\rho, xm, \sigma^2_{MOY}) \qquad (37)$$

En combinant les équations (30) et (33), on obtient :

$$h^M(\eta,\mu e,xm) = Q(g^M_1(\eta,\mu e), xm, \sigma^2_{MOY})$$
$$+ Q(g^M_2(\eta,\mu e), xm, \sigma^2_{MOY}) \qquad (38)$$
$$- Q(\mu e + \varepsilon_{MIN}, xm, \sigma^2_{MOY})$$

Comme précédemment, on peut considérer que la probabilité de fausse alarme $P_{FA}$ (p, t) en un pixel p et un instant donné t est égale à $P_{FA}$ (p, t) = $h^M$ ($\eta$ (p, t), $\mu$e (p, t), $\mu$m (p, t) ), c'est-à-dire la probabilité que le test d'hypothèse déclenche l'alarme (la fonction $T^M$ de test dépassant le seuil) alors qu'il n'y a pas de cible en ce pixel (xm (p, t) = $\mu$m (p, t) tel que défini à l'expression (31) ) .

On peut par exemple déterminer la valeur du seuil $\eta$ (p, t) pour laquelle la fonction $h^M$ ($\eta$ (p, t), $\mu$e (p, t), $\mu$m (p, t) ) vaut théoriquement $P_{FA0}$. Tel que décrit précédemment, $\mu$m (p, t) est par exemple remplacé par l'estimation $\mu$e (p, t), ou par ($\mu$e (p, t) + k·$\sigma$e$_{EST}$ (p, t) ), ou par un calcul d'intégrale prenant en compte une densité de probabilité de l'erreur d'estimation du fond.

Modèle d'évolution spatio-temporelle du fond

Dans un mode préféré de mise en oeuvre, on raffine l'étape 10 d'estimation du fond en décomposant le terme d'évolution w(p,t) défini dans l'expression (6) en au moins deux composantes indépendantes :

$$w(p,t) = w_{TEMP}(p,t) + w_{SPATIAL}(p,t) \qquad (39)$$

$W_{TEMP}$ (p, t) est une composante d'évolution temporelle, par exemple distribuée suivant une loi Normale N (0, $\sigma^2_{TEMP}$ (p, t) ), et $W_{SPATIAL}$ (p, t) est une composante d'évolution spatiale, par exemple distribuée suivant une loi Normale N (0, $\sigma^2_{SPATIAL}$ (p, t) ), de sorte que :

$$\sigma^2_{EVOL}(p,t) = \sigma^2_{TEMP}(p,t)) + \sigma^2_{SPATIAL}(p,t) \qquad (40)$$

La composante d'évolution temporelle modélise l'évolution temporelle de la scène observée. La composante d'évolution spatiale modélise l'erreur de registration entre images successives.

Suivant un exemple non limitatif, les écart-types $\sigma_{TEMP}$ (p, t) et $\sigma_{SPATIAL}$ (p, t) sont estimés en considérant, pour un pixel donné, un groupe de neuf pixels centré sur ledit pixel donné. De manière plus générale, on peut considérer d'autres configurations de groupes de pixels, en particulier des groupes comportant un nombre plus important de pixels. La coordonnée pixel p est remplacée temporairement par des coordonnées (i, j) (ligne, colonne) conventionnelles.

L'écart-type $\sigma_{TEMP}$ (p, t) de l'évolution temporelle peut par exemple s'exprimer sous la forme :

$$\sigma^2_{TEMP}(i,j,t) =$$

$$\frac{1}{K-1}\sum_{k=1}^{K}\left(\left(\frac{1}{9}\sum_{p=-1}^{p=1}\sum_{q=-1}^{q=1}\mu e(i+p,j+q,t)\right) - \left(\frac{1}{9}\sum_{p=-1}^{p=1}\sum_{q=-1}^{q=1}\mu e(i+p,j+q,t-k\Delta t)\right)\right)^2 \qquad (41)$$

qui représente l'évolution estimée du groupe de neuf pixels sur une fenêtre temporelle de K images (typiquement cinq à dix images) .

L'écart-type $\sigma_{SPATIAL}$ (p, t) de l'évolution spatiale peut par exemple s'exprimer sous la forme :

$$\sigma^2_{\text{SPATIAL}}(i,j,t) = \sigma^2_{\text{REG}} \cdot \left( \mu e(i,j,t) - \frac{1}{9} \sum_{p=-1}^{p=1} \sum_{q=-1}^{q=1} \mu e(i+p, j+q, t) \right)^2 \qquad (42)$$

où $\sigma_{\text{REG}}$ désigne l'écart-type de l'erreur de registration, qui peut être estimé en mettant un procédé connu de l'homme de l'art, par exemple en fonction de mesures de l'attitude du véhicule embarquant le capteur optique.

Généralisation au test séquentiel

De manière plus générale, dans des modes de mise en oeuvre du procédé de détection basés en particulier sur le traitement de plusieurs images de détection (cas « multi- mesures »), on peut considérer, pour chaque pixel à évaluer, deux seuils $\eta_1$ (p, t) et $\eta_2$ (p, t) (avec $\eta_1$ (p, t) < $n_2$ (p, t) ) utilisés pour mettre en oeuvre un test séquentiel. Par exemple, si le résultat de la fonction de test est inférieur à $\eta_1$ (p, t), on conclut que l'hypothèse $H_0$ (p, t) est la plus vraisemblable ; si ledit résultat est supérieur à $\eta_2$ (p, t), on conclut que l'hypothèse $H_1$ (p, t) est la plus vraisemblable ; si le résultat est entre les deux seuils, on attend d'avoir plus d'images de détection pour conclure sur l'hypothèse la plus vraisemblable. Un exemple de tels tests séquentiels est connu de la publication scientifique  « A Sequential Detector for Biochemical Release in Realistic Environments », des auteurs M. Ortner et A. Nehorai, publié dans la revue IEEE Transactions on Signal Processing.

Dans le cas d'un test séquentiel à double seuil, le calcul du seuil $\eta_1$ (p, t), est similaire au cas précédent : le seuil est obtenu en fixant la probabilité de fausse alarme pour chaque pixel de détection. Par contre le calcul de $\eta_2$ (p, t) est obtenu en fixant la probabilité de détection. La probabilité de détection peut être calculée en remplaçant dans les équations qui précèdent h ($\eta$, $\mu e$, $\mu$) par $h_2$ ($\eta$, $\mu e$, $\mu$) =h ($\eta$, $\mu e$, $\mu$+c) où c est le niveau minimal de cible pour lequel on fixe la probabilité de détection (c > $\varepsilon_{\min}$) . De préférence, la valeur du seuil $\eta_2$ (p, t) est déterminée de sorte que la probabilité de détection en ce seuil est égale ou supérieure à une valeur prédéfinie.

On comprend que, du fait de la prise en compte du fond dans le test de détection et dans les seuils associés à chaque pixel à évaluer, l'invention permet de mieux maîtriser les performances de la détection. En particulier, l'invention permet de maîtriser la probabilité de fausse alarme en chaque pixel à évaluer, notamment du fait d'une prise en compte, d'une part des caractéristiques de l'erreur d'estimation du fond, et d'autre part du bruit photonique présent dans les images acquises, dont les caractéristiques varient d'un pixel à l'autre.

Par ailleurs, le procédé de détection améliore les performances de la détection, en particulier face à des décalages résiduels entre des images acquises à des instants différents, décalages qui sont dus notamment à des mouvements parasites de la ligne de visée du capteur optique au cours de l'acquisition. Les performances en présence de décalages résiduels sont notamment améliorées dans les modes de mise en oeuvre comportant l'une au moins des caractéristiques suivantes :

- l'estimation du fond se fait sur une séquence d'images ;
- l'estimation du fond se fait d'après un modèle d'évolution comportant  une composante spatiale modélisant les erreurs de registration ;
- le test de détection exploite une pluralité d'images de détection.

Du fait que les performances de la détection sont améliorées, on comprend que l'on peut avantageusement obtenir un niveau de performances donné avec un dispositif qui sera moins complexe et moins coûteux qu'un dispositif mettant en oeuvre un procédé de détection suivant l'état de l'art.

**Revendications**

1. Procédé de détection d'une cible dans au moins une image constituée d'une pluralité de pixels, dite « image de détection », la détection s'effectuant par évaluation (30), en chaque pixel à évaluer, d'un test de détection par rapport à au moins un seuil, **caractérisé en ce que** la valeur de l'au moins un seuil dépend du pixel à évaluer, et **en ce que** ledit procédé comporte, pour chaque pixel à évaluer, les étapes de :

   - (10) estimation d'un fond de l'image de détection en ce pixel et estimation de caractéristiques statistiques de l'erreur d'estimation du fond de l'image en ce pixel,
   - (20) détermination de la valeur de l'au moins un seuil en ce pixel en fonction du fond estimé de l'image en ce pixel et en fonction des caractéristiques statistiques estimées de l'erreur d'estimation du fond de l'image en ce pixel.

2. Procédé selon la revendication 1, dans lequel les caractéristiques statistiques estimées de l'erreur d'estimation du fond en un pixel à évaluer sont au moins un écart-type de l'erreur d'estimation en ce pixel.

3. Procédé selon la revendication 2, dans lequel la valeur de l'au moins un seuil associée à un pixel à évaluer est déterminée (20) en remplaçant, dans la détermination (20) de la valeur de l'au moins un seuil, le fond estimé en ce pixel par un fond de remplacement égal à une fonction dudit fond estimé et de l'écart type estimé de l'erreur d'estimation en ce pixel.

4. Procédé selon la revendication 3, dans lequel le fond de remplacement est égal à la somme dudit fond estimé et d'un terme correspondant à l'écart-type estimé multiplié par un paramètre positif prédéfini.

5. Procédé selon la revendication 3 ou 4, dans lequel, pour chaque pixel à évaluer, la valeur de l'au moins un seuil en ce pixel est déterminée (20) comme étant :

- d'après une expression de la probabilité de fausse alarme du test de détection, expression qui dépend du fond estimé et de l'au moins un seuil à déterminer,

la valeur permettant d'assurer que la probabilité de fausse alarme en ce pixel est théoriquement égale ou inférieure à une valeur prédéfinie, en considérant le fond estimé en ce pixel comme étant égal au fond de remplacement en ce pixel.

6. Procédé selon la revendication 1, dans lequel les caractéristiques statistiques estimées de l'erreur d'estimation du fond en un pixel à évaluer sont au moins une fonction représentative d'une densité de probabilité de l'erreur d'estimation du fond en ce pixel.

7. Procédé selon la revendication 6, dans lequel, pour chaque pixel à évaluer, la valeur de l'au moins un seuil en ce pixel est déterminée (20) comme étant :

- d'après une expression de la probabilité de fausse alarme du test de détection, expression qui dépend du fond estimé, de la densité de probabilité estimée de l'erreur d'estimation du fond, et de l'au moins un seuil à déterminer,

la valeur permettant d'assurer que la probabilité de fausse alarme en ce pixel est théoriquement égale ou inférieure à une valeur prédéfinie.

8. Procédé selon l'une des revendications précédentes, dans lequel on utilise le fond estimé pour modéliser, dans la détermination (20) de la valeur de l'au moins un seuil en chaque pixel à évaluer, un bruit instationnaire dont les caractéristiques dépendent d'un niveau du signal mesuré en ce pixel, de préférence un bruit instationnaire photonique.

9. Procédé selon l'une des revendications précédentes, dans lequel une fonction de test T utilisée par le test de détection s'exprime en chaque pixel p à évaluer à un instant t sous la forme suivante :

- si $y(p,t) - \mu e(p,t) \geq \varepsilon_{MIN}$ :

$$T = \frac{(y(p,t) - \mu e(p,t))^2}{\sigma_E^2 + \mu e(p,t)}$$

- si $y(p,t) - \mu e(p,t) < \varepsilon_{MIN}$ :

$$T = \frac{(y(p,t) - \mu e(p,t))^2}{\sigma_E^2 + \mu e(p,t)} - \frac{(y(p,t) - \mu e(p,t) - \varepsilon_{MIN})^2}{\sigma_E^2 + \mu e(p,t) + \varepsilon_{MIN}}$$

expressions dans lesquelles y est la valeur du pixel p, $\mu$e est le fond estimé en ce pixel p, $\sigma_E$ est un écart-type prédéterminé d'un bruit de mesure, et $\varepsilon_{MIN}$ est un niveau minimal prédéfini d'une cible à détecter.

10. Procédé selon la revendication 9, dans lequel, lorsque la détection utilise un nombre M d'images de détection, la fonction de test T s'exprime sous la forme suivante :

- si ym(p,t) - $\mu$e(p,t) $\geq \varepsilon_{MIN}$ :

$$T = \sum_{m=0}^{M-1} \frac{(y(p,t+m\Delta t) - \mu e(p,t))^2 - (y(p,t+m\Delta t) - ym(p,t))^2}{\sigma_E^2 + \mu e(p,t)}$$

- si ym(p,t) - $\mu$e(p,t) $< \varepsilon_{MIN}$ :

$$T = \sum_{m=0}^{M-1} \frac{(y(p,t+m\Delta t) - \mu e(p,t))^2 - (y(p,t+m\Delta t) - \mu e(p,t) - \varepsilon_{MIN})^2}{\sigma_E^2 + \mu e(p,t)}$$

expressions dans lesquelles $\Delta$t est la période d'acquisition entre des images de détection, et ym est la valeur moyenne des pixels p des M images de détection.

11. Procédé selon l'une des revendications précédentes, dans lequel l'étape (10) d'estimation du fond et d'estimation des caractéristiques statistiques de l'erreur d'estimation du fond met en oeuvre un filtre de Kalman prenant en compte un modèle d'évolution du fond de l'image de détection.

12. Procédé selon la revendication 11, dans lequel le modèle d'évolution du fond de l'au moins une image de détection comporte une composante d'évolution spatiale et une composante d'évolution temporelle.

13. Procédé selon la revendication 12, dans lequel la composante d'évolution spatiale et la composante d'évolution temporelle sont modélisées, pour un pixel à évaluer, par des lois normales de moyennes nulles et d'écart-types respectifs déterminés en fonction des valeurs de pixels d'un groupe de pixels autour du pixel à évaluer.

14. Procédé selon l'une des revendications précédentes, dans lequel le fond d'une image de détection est estimé (10) en fonction d'au moins une image, dite « image d'estimation », chaque image d'estimation étant acquise préalablement à l'image de détection et étant séparée de ladite image de détection par un délai non nul, égal ou supérieur à un temps prédéfini d'apparition ($\delta$) d'une cible.

15. Procédé selon l'une des revendications précédentes, dans lequel on détermine (20) au moins deux seuils pour chaque pixel à évaluer, et dans lequel la valeur d'un premier seuil en ce pixel est déterminée (20) de sorte à assurer que la probabilité de fausse alarme en ce pixel est théoriquement égale ou inférieure à une première valeur prédéfinie, et la valeur d'un second seuil en ce pixel est déterminée (20) de sorte à assurer que la probabilité de détection en ce pixel est théoriquement égale ou supérieure à une seconde valeur prédéfinie.

**Patentansprüche**

1. Verfahren zum Ermitteln eines Ziels in zumindest einem Bild, das sich aus einer Vielzahl von Pixeln zusammensetzt, und als "Ermittlungsbild" bezeichnet wird, wobei die Ermittlung durch die Auswertung (30) eines Ermittlungstests für jedes auszuwertende Pixel unter Berücksichtigung von zumindest einem Grenzwert erfolgt, **dadurch gekennzeichnet, dass** der Wert zumindest eines Grenzwertes vom auszuwertenden Pixel abhängt, und dadurch, dass das besagte Verfahren für jedes auszuwertende Pixel die folgenden Schritte umfasst:

- (10) die Einschätzung des Hintergrunds des Ermittlungsbildes in diesem Pixel und die Einschätzung der statistischen Merkmale eines Einschätzungsfehlers des Bildhintergrunds in diesem Pixel,
- (20) die Bestimmung des Wertes von zumindest einem Grenzwert in diesem Pixel in Abhängigkeit vom eingeschätzten Hintergrund des Bildes in diesem Pixel und gemäß den eingeschätzten statistischen Merkmalen des Einschätzungsfehlers des Bildhintergrunds in diesem Pixel.

2. Verfahren nach Anspruch 1, bei dem die eingeschätzten statistischen Merkmale des Einschätzungsfehlers des Bildhintergrunds in einem auszuwertenden Pixel zumindest eine Standardabweichung des Einschätzungsfehlers in diesem Pixel sind.

3. Verfahren nach Anspruch 2, bei dem der Wert des zumindest einen Grenzwertes, der einem auszuwertenden Pixel zugeordnet ist, bestimmt (20) wird, indem man in der Bestimmung (20) des Wertes des zumindest einen Grenzwertes den eingeschätzten Hintergrund in diesem Pixel durch einen Austauschhintergrund ersetzt, der gleich einer Funktion des besagten eingeschätzten Hintergrunds und der eingeschätzten Standardabweichung des Einschätzungsfehlers in diesem Pixel ist.

4. Verfahren nach Anspruch 3, bei dem der Austauschhintergrund gleich der Summe des besagten eingeschätzten Hintergrunds und eines Elements entsprechend der eingeschätzten Standardabweichung ist, die mit einem vorbestimmten positiven Parameter multipliziert wird.

5. Verfahren nach Anspruch 3 oder 4, bei dem der Wert des zumindest einen Grenzwerts in diesem Pixel für jedes auszuwertende Pixel folgendermaßen bestimmt (20) wird:

- gemäß einem Ausdruck der Wahrscheinlichkeit eines falschen Alarms aus dem Ermittlungstest, einem Ausdruck, der vom eingeschätzten Hintergrund und zumindest einem zu bestimmenden Grenzwert abhängt, wobei durch den Wert gewährleistet werden kann, dass die Wahrscheinlichkeit eines falschen Alarms in diesem Pixel theoretisch kleiner oder gleich einem vorbestimmten Wert ist, indem man annimmt, dass der geschätzte Hintergrund in diesem Pixel gleich dem Austauschhintergrund in diesem Pixel ist.

6. Verfahren nach Anspruch 1, bei dem die eingeschätzten statistischen Merkmale des Einschätzungsfehlers des Bildhintergrunds in einem auszuwertenden Pixel zumindest eine Funktion sind, die repräsentativ für eine Wahrscheinlichkeitsdichte des Einschätzungsfehlers des Hintergrunds in diesem Pixel ist.

7. Verfahren nach Anspruch 6, bei dem der Wert des zumindest einen Grenzwertes in diesem Pixel für jedes auszuwertende Pixel folgendermaßen bestimmt (20) wird:

- gemäß einem Ausdruck der Wahrscheinlichkeit eines falschen Alarms aus dem Ermittlungstest, einem Ausdruck, der vom eingeschätzten Hintergrund, der eingeschätzten Wahrscheinlichkeitsdichte des Einschätzungsfehlers des Hintergrunds und zumindest einem zu bestimmenden Grenzwert abhängt,

wobei durch den Wert gewährleistet werden kann, dass die Wahrscheinlichkeit eines falschen Alarms in diesem Pixel theoretisch kleiner oder gleich einem vorbestimmten Wert ist.

8. Verfahren nach einem der vorherigen Ansprüche, bei dem man den eingeschätzten Hintergrund verwendet, um in der Bestimmung (20) des Wertes des zumindest einen Grenzwertes in jedem auszuwertenden Pixel ein nicht stationäres Geräusch zu formen, dessen Merkmale von der Stärke des Signals abhängen, das in diesem Pixel gemessen wird, vorzugsweise jedoch ein nicht stationäres photonisches Geräusch.

9. Verfahren nach einem der vorherigen Ansprüche, bei dem eine Testfunktion T, die vom Ermittlungstest verwendet wird, in jedem auszuwertenden Pixel p zu einem Zeitpunkt t in der folgenden Form zum Ausdruck kommt:

wenn $y(p,t) - \mu e(p,t) \geq \varepsilon_{MIN}$:

$$T = \frac{(y(p,t) - \mu e(p,t))^2}{\sigma_E^2 + \mu e(p,t)}$$

wenn $y(p,t) - \mu e(p,t) < \varepsilon_{MIN}$:

$$T = \frac{(y(p,t) - \mu e(p,t))^2}{\sigma_E^2 + \mu e(p,t)} - \frac{(y(p,t) - \mu e(p,t) - \varepsilon_{MIN})^2}{\sigma_E^2 + \mu e(p,t) + \varepsilon_{MIN}}$$

Ausdrücke, bei denen y der Wert des Pixels p, $\mu e$ der eingeschätzte Hintergrund in diesem Pixel p, $\sigma_E$ eine vorbestimmte Standardabweichung eines Messgeräusches, $\varepsilon_{MIN}$ ein vordefiniertes Mindestniveau eines zu ermittelnden Zieles ist.

10. Verfahren nach Anspruch 9, bei dem die Testfunktion T, wenn die Ermittlung eine Anzahl M an Ermittlungsbildern verwendet, in der folgenden Form zum Ausdruck kommt:

wenn $ym(p,t) - \mu e(p,t) \geq \varepsilon_{MIN}$:

$$T = \sum_{m=0}^{M-1} \frac{(y(p,t + m\Delta t) - \mu e(p,t))^2 - (y(p,t + m\Delta t) - ym(p,t))^2}{\sigma_E^2 + \mu e(p,t)}$$

wenn $ym(p,t) - \mu e(p,t) < \varepsilon_{MIN}$:

$$T = \sum_{m=0}^{M-1} \frac{(y(p,t + m\Delta t) - \mu e(p,t))^2 - (y(p,t + m\Delta t) - \mu e(p,t) - \varepsilon_{MIN})^2}{\sigma_E^2 + \mu e(p,t)}$$

Ausdrücke, bei denen At der Ermittlungszeitraum zwischen den Ermittlungsbildern, und ym der Mittelwert der Pixel p der M Ermittlungsbilder ist.

11. Verfahren nach einem der vorherigen Ansprüche, bei dem der Schritt der Einschätzung (10) des Hintergrunds und der Einschätzung der statistischen Merkmale des Einschätzungsfehlers des Hintergrunds einen Kalman-Filter anwendet, der ein Entwicklungsmodell des Hintergrunds des Ermittlungsbildes berücksichtigt.

12. Verfahren nach Anspruch 11, bei dem das Entwicklungsmodell des Hintergrunds zumindest eines Ermittlungsbildes eine räumliche Entwicklungskomponente und eine zeitliche Entwicklungskomponente umfasst.

13. Verfahren nach Anspruch 12, bei dem die räumliche Entwicklungskomponente und die zeitliche Entwicklungskomponente für ein auszuwertendes Pixel durch entsprechende Normalgesetze von Mittelwerten gleich Null und den jeweiligen Standardabweichungen geformt werden, die gemäß den Pixelwerten einer Gruppe von Pixeln bestimmt werden, die sich rund um das auszuwertende Pixel befinden.

14. Verfahren nach einem der vorherigen Ansprüche, bei dem der Hintergrund eines Ermittlungsbildes in Abhängigkeit von zumindest einem Bild, das als "Einschätzungsbild" bezeichnet wird, eingeschätzt (10) wird, wobei jedes Einschätzungsbild vor dem Ermittlungsbild ermittelt wird, und durch eine Zeitspanne ungleich Null, größer oder gleich einer vorbestimmten Erscheinungszeit ($\delta$) eines Ziels vom besagten Ermittlungsbild getrennt wird.

**15.** Verfahren nach einem der vorherigen Ansprüche, bei dem man zumindest zwei Grenzwerte für jedes auszuwertende Pixel bestimmt (20), und in dem der Wert eines ersten Grenzwerts in diesem Pixel so bestimmt (20) wird, dass dafür gesorgt wird, dass die Wahrscheinlichkeit eines falschen Alarms in diesem Pixel theoretisch gleich oder kleiner einem ersten vorbestimmten Wert ist, und der Wert eines zweiten Grenzwerts in diesem Pixel so bestimmt (20) wird, dass dafür gesorgt wird, dass die Ermittlungswahrscheinlichkeit in diesem Pixel theoretisch gleich oder größer einem zweiten vorbestimmten Wert ist.

**Claims**

**1.** A method for detecting a target in at least one image made up of a plurality of pixels, referred to as "detection image", the detection being carried out by evaluating (30), in each pixel to be evaluated, a detection test with respect to at least one threshold, **characterised in that** the value of at least one threshold depends on the pixel to be evaluated, and **in that** the said method comprises, for each pixel to be evaluated, the steps of:

- (10) estimating the background of the detection image in this pixel, and estimating the statistical characteristics of the estimation error of the background of the image in this pixel,
- (20) determining the value of the at least one threshold in this pixel, in accordance with the estimated background of the image in this pixel, and in accordance with the estimated statistical characteristics of the estimation error of the background of the image in this pixel.

**2.** A method according to claim 1, wherein the estimated statistical characteristics of the estimation error of the background in a pixel to be evaluated are at least a standard deviation of the estimation error in this pixel.

**3.** A method according to claim 2, wherein the value of the at least one threshold associated with a pixel to be evaluated is determined (20) by replacing, in the determination (20) of the value of the at least one threshold, the estimated background in this pixel with a replacement background, equal to a function of said estimated background and of the estimated standard deviation of the estimation error in this pixel.

**4.** A method according to claim 3, wherein the replacement background is equal to the sum of said estimated background and of an element corresponding to the estimated standard deviation multiplied by a predefined positive parameter.

**5.** A method according to claim 3 or 4, wherein, for each pixel to be evaluated, the value of the at least one threshold in this pixel is determined (20) as being:

- according to an expression of the false alarm probability of the detection test, expression which depends on the estimated background and on the at least one threshold to be determined,

the value allowing to ensure that the false alarm probability in this pixel is theoretically equal to or less than a predefined value, by considering the estimated background in this pixel as being equal to the replacement background in this pixel.

**6.** A method according to claim 1, wherein the estimated statistical characteristics of the estimation error of the background in a pixel to be evaluated are at least one function representative of a probability density of the estimation error of the background in this pixel.

**7.** A method according to claim 6, wherein, for each pixel to be evaluated, the value of the at least one threshold in this pixel is determined (20) as being:

- according to an expression of the false alarm probability of the detection test, expression which depends on the estimated background, on the estimated probability density of the estimation error of the background, and on the at least one threshold to be determined,

the value allowing to ensure that the false alarm probability in this pixel is theoretically equal to or less than a predefined value.

**8.** A method according to one of the previous claims, wherein the estimated background is used to model, in the determination (20) of the value of the at least one threshold in each pixel to be evaluated, an non-stationary noise the characteristics of which depend on a level of the signal measured in this pixel, preferentially a photonic non-stationary noise.

9. A method according to one of the previous claims, wherein a test function T used by the detection test is expressed in each pixel p to be evaluated at a time t, in the following form:

   - si $y(p,t) - \mu e(p,t) \geq \varepsilon_{MIN}$ :

$$T = \frac{(y(p,t) - \mu e(p,t))^2}{\sigma_E^2 + \mu e(p,t)}$$

   - si $y(p,t) - \mu e(p,t) < \varepsilon_{MIN}$ :

$$T = \frac{(y(p,t) - \mu e(p,t))^2}{\sigma_E^2 + \mu e(p,t)} - \frac{(y(p,t) - \mu e(p,t) - \varepsilon_{MIN})^2}{\sigma_E^2 + \mu e(p,t) + \varepsilon_{MIN}}$$

   expressions in which y is the value of the pixel p, $\mu e$ is the estimated background in this pixel p, $\sigma_E$ is a predetermined standard deviation of a measurement noise, and $\varepsilon_{MIN}$ is a predefined minimum level of a target to be detected.

10. A method according to claim 9, wherein, when the detection uses a number M of detection images, the test function T is expressed itself in the following form:

   - si $ym(p,t) - \mu e(p,t) \geq \varepsilon_{MIN}$ :

$$T = \sum_{m=0}^{M-1} \frac{(y(p,t + m\Delta t) - \mu e(p,t))^2 - (y(p,t + m\Delta t) - ym(p,t))^2}{\sigma_E^2 + \mu e(p,t)}$$

   - si $ym(p,t) - \mu e(p,t) < \varepsilon_{MIN}$ :

$$T = \sum_{m=0}^{M-1} \frac{(y(p,t + m\Delta t) - \mu e(p,t))^2 - (y(p,t + m\Delta t) - \mu e(p,t) - \varepsilon_{MIN})^2}{\sigma_E^2 + \mu e(p,t)}$$

   expressions in which $\Delta t$ is the acquisition period between the detection images, and ym is the average value of the pixels p of the M detection images.

11. A method according to one of the previous claims, wherein the step (10) of estimating the background and of estimating the statistical characteristics of the estimation error of the background implements a Kalman filter taking into account an evolution model of the background of the detection image.

12. A method according to claim 11, wherein the evolution model of the background of the at least one detection image comprises a spatial evolution component and a temporal evolution component.

13. A method according to claim 12, wherein the spatial evolution component and the temporal evolution component are modeled, for one pixel to be evaluated, by respective normal laws of zero means and of standard deviations determined in accordance with the pixel values of a group of pixels around the pixel to be evaluated.

**14.** A method according to one of the previous claims, wherein the background of a detection image is estimated (10) in accordance with the at least one image, referred to as "estimation image", each estimation image being acquired prior the detection image, and being separated from said detection image by a non-zero period, equal to or higher than a predefined appearance time ($\delta$) of a target.

**15.** A method according to one of the previous claims, wherein at least two thresholds for each pixel to be evaluated are determined (20), and wherein the value of a first threshold in this pixel is determined (20) so as to ensure that the probability of false alarm in this pixel is theoretically equal to or less than a first predefined value, and the value of a second threshold in this pixel is determined (20) so as to ensure that the detection probability in this pixel is theoretically equal to or higher than a second predefined value.

EP 2 360 621 B1

**Fig. 1**

image de
détection

image
d'estimation → | estimation du fond de l'image | — 10

| détermination de seuils | — 20

| évaluation du test de détection | — 30

**Fig. 2**

début

| image de détection suivante | — 40

image
d'estimation → | estimation du fond de l'image | — 10

| détermination de seuils | — 20

| évaluation du test de détection | — 30

cible détectée ? — non

oui

fin

**Fig. 3**

début

| image de détection suivante | — 40 → | retard ≥ $\delta$ | — 50

| estimation du fond de l'image | — 10

| détermination de seuils | — 20

| évaluation du test de détection |

cible détectée ? — 30

non

oui

fin

24

EP 2 360 621 B1

## Fig. 4

```
        début
          │
          ▼
   image de ────── 40          retard ≥ δ ──── 50
   détection suivante  ────────►
          │                          │
          │                          ▼
          │                    estimation du ──── 10
          │                    fond de l'image
          │                          │
          ▼                          ▼
   évaluation du  ◄──────── détermination
   test de détection         de seuils ──── 20
          │           30              │
          ▼                           │
   non   cible                        │
   ◄──── détectée ?                   │
          │                           │
         oui                          ▼           fin
          ▼                                        ▲
   image de              évaluation du       non   │
   détection suivante ─► test de détection ─► cible
                                              détectée ?
          40                  30              │
          ▲                                  oui
          └──────────────────────────────────┘
```

## Fig. 5

25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2923024 A1
- US 20050185824 A1

**Littérature non-brevet citée dans la description**

- **A. TZANNES ; D.H. BROOKS.** Detecting small moving objects using temporal hypothesis testing. *IEEE Transactions on Aerospace and Electronics Systems,* Avril 2002, vol. 38 (2
- **E. WAN ; R.V. DER MERWE.** The Unscented Kalman Filter. Wiley
- **M. ORTNER ; A. NEHORAI.** A Sequential Detector for Biochemical Release in Realistic Environments. *IEEE Transactions on Signal Processing*